# EUROPEAN PATENT SPECIFICATION

(11) **EP 3 167 120 B1**
(45) Date of publication and mention of the grant of the patent: **07.06.2023**
(21) Application number: 15819223.7
(22) Date of filing: 31.03.2015
(51) Int. Cl.: B61B 13/12, B61L 25/02, B61D 9/08, B61L 25/04, B61L 27/04, B61D 9/14, B61G 1/00

(54) **RAIL TRANSPORT DUMP LOOP SYSTEM FOR CONVEYING BULK MATERIALS**
SCHIENENTRANSPORT MIT MÜLLDEPONIEKREISLAUFSYSTEM ZUR FÖRDERUNG VON SCHÜTTGUT
SYSTÈME DE BOUCLE DE DÉCHARGE DE TRANSPORT SUR RAILS POUR LE TRANSPORT DE MATÉRIAUX EN VRAC

(30) Priority: 08.07.2014 US 201462021905 P
(43) Date of publication of application: 17.05.2017
(73) Proprietor: Rail-Veyor Technologies Global Inc., Lively, Ontario P3Y 1L7 (CA)
(72) Inventor: FISK, James Everrett, Antioch, Illinois 60002 (US); FANTIN, Patrick Walter Joseph, Hanmer, Ontario P3P 1A5 (CA); MCCALL, William John, Garson, Ontario P3L 1L6 (CA); NIEMEYER, David Wilhelm, Val Caron, Ontario P3N 1H9 (CA); REAY, Curtis Ron, Hanmer, Ontario P3P 1S2 (CA); ZANETTI, Eric Benjamin Alexander, Sudbury, Ontario P3A 2B7 (CA); HELLBERG, Esko Johannes, Lively, Ontario P3Y 1M8 (CA)
(74) Representative: Goddard, Frances Anna
(86) International application number: PCT/CA2015/050252
(87) International publication number: WO 2016/004517

(56) References cited:
- WO-A1-2007/082315
- CN-Y- 201 362 808
- US-A- 3 332 535
- US-A- 3 752 334
- US-A1- 2003 226 470
- US-A1- 2006 162 608
- US-A1- 2008 154 451

## Description

### FIELD OF THE INVENTION

The present invention generally relates to a rail transport system having no internal drive, and in particular to a dump loop and components thereof of a rail transport system for conveying bulk materials.

### BACKGROUND

Methods and arrangements for moving bulk materials in conventional trains, trucks, conveyor belts, aerial tramways or as a slurry in a pipeline are well known and are typically used in various industries because of site-specific needs or experience. In the minerals and aggregate industries, for example, bulk materials are moved from mining or extraction sites to a process facility for upgrading or sizing. Trucks had been the system of choice for many years for moving bulk materials. Trucks were enlarged for off-road vehicles because of their efficient transport of bulk materials and increased capacity. These vehicles, however, are limited to site specific applications and are provided at a high capital cost. Major off-road trucks have evolved that require very wide roadways for passing each other, are not energy efficient per ton-mile of material transported, have limited hill climbing ability, and are dangerous because of potential of operator error as well as being environmentally unpleasant neighbors.

Trains have been used for many years for bulk material transport in hopper cars. Because of low friction, the use of free rolling iron or steel wheels on steel tracks they are very efficient users of energy but are limited in capacity relative to the drivers or locomotives required. Large tonnage long trains use multiple drivers that are heavy units, which dictate the weight of rail and ballast requirements. All railroads must be designed for the weight of the drivers or locomotives included fuel, not the combination of car plus loads, which are significantly less. The drivers need to be of sufficient weight so that the rotary drive tire makes contact with the stationary rail and must have sufficient friction to produce forward or reverse movement of what will include heavily loaded cars. The inclination capable of conventional railroad systems is limited to the friction between the weighted drive wheels and track. Rail cars are individual units that each has to be loaded in a batch process, one car at a time. Bulk materials can be unloaded from hopper cars by opening bottom dump hatches or can be individually rotated to dump out of the top. Spotting cars for both loading and unloading is time consuming and labor intensive.

Although moving from one location to another may be cost effective, the added cost of batch loading and unloading stages in shorter distance transports reduces the rail transport cost effectiveness. With normal single dual track train systems only one train can be used on a system at a time.

Conveyor belts have been used for many years to move bulk materials. A wide variety of conveyor belt systems exist that can move practically every conceivable bulk material. Very long distance single belt runs are very capital cost intensive and are subject to catastrophic failure when a belt tears or rips, typically shutting down the entire system and dumping the carried load, requiring cleanup. Conveyor belts are relatively energy efficient but can require high maintenance because of an inherent problem of multiple idler bearings requiring constant checking and replacement. Short distance conveyor belts are commonly used in dry or clamp transport of almost all types of materials. Because conveyor belts are very flexible and desirably operated over fairly flat terrain, they are not efficient at transporting moderately high solids slurry where water and fines can accumulate in low spots and spill over the side creating wet spilled slurry handling problems.

Some bulk materials can be transported in pipelines when mixed with water to form slurry that is pushed or pulled with a motor driven pump impeller in an airless or flooded environment. The size of the individual particles that are present in the bulk materials dictates the transport speed necessary to maintain movement. For example, if large particles are present then the velocity must be high enough to maintain movement by saltation or skidding along the bottom of the pipe of the very largest particles. Because pipelines operate in a dynamic environment, friction is created with the stationary pipe wall by a moving fluid and solid mass. The higher the speed of the moving mass the higher the friction loss at the wall surface requiring increased energy to compensate. Depending on the application, the bulk material has to be diluted with water initially to facilitate transport and dewatering at the discharge end.

Light rail, narrow gage railroads for transporting bulk material from mines and the like is known as described by way of example with reference to U.S. Pat. No. 3,332,535 to Hubert et al. wherein a light rail train made up of several cars is propelled by drive wheels and electric motors combinations, dumping over an outside loop. By way of further example, U.S. Pat. No. 3,752,334 to Robinson, Jr. et al. discloses a similar narrow gage railroad wherein the cars are driven by an electric motor and drive wheels. U.S. Pat. No. 3,039,402 to Richardson describes a method of moving railroad cars using a stationary friction drive tire.

While the above described transport systems and methods have specific advantages over conventional systems, each is highly dependent upon a specific application. It has become apparent that increases in labor, energy and material costs plus environmental concerns that alternate transport methods need to be applied that are energy and labor efficient, quiet, non-polluting, and esthetically unobtrusive. US Patent Publications US 2003/0226470 to Dibble et al. for "Rail Transport System for Bulk Materials", US 2006/0162608 to Dibble for "Light Rail Transport System for Bulk Materials", and U.S. Pat. No. 8,140,202 to Dibble describe a light rail train utilizing an open semi-circular trough train with drive stations. Such a light rail system offers an innovative alternative to the above mentioned material transport systems and provides for the transport of bulk materials using a plurality of connected cars open at each end except for the first and last cars, which have end plates. The train forms a long open trough and has a flexible flap attached to each car and overlapping the car in front to prevent spillage during movement. The lead car has four wheels and tapered side drive plates in the front of the car to facilitate entry into the drive stations. The cars that follow have two wheels with a clevis hitch connecting the front to the rear of the car immediately forward. Movement of the train is provided by a series of appropriately placed drive stations having drive motors on either side of the track which are AC electric motors with drive means such as tires to provide frictional contact with the side drive plates. At each drive station, each drive motor is connected to an AC inverter and controller for drive control, with both voltage and frequency being modified as needed. The electric motors each turn a tire in a horizontal plane that physically contacts two parallel side drive plates external of the wheels of each car. Pressure on the side drive plates by these drive tires converts the rotary motion of the tires into horizontal thrust. The wheels on the cars are spaced to allow operation in an inverted position by use of a double set of rails to allow the cars to hang upside down for unloading. By rotating this double track system the unit train can be returned to it normal operating condition. Such a system is well known and commercially referred to as the Rail-Veyor^{™} material handling system.

Flanged wheels may be symmetrical to the side drive plates allowing operation in an inverted position which, when four rails are used to encapsulate the wheel outside loop discharge of the bulk material is possible. By using elevated rails, the train can operate in the inverted position as easily as in the convention manner.

Yet further, drives for such light rail systems have been developed as described in U.S. Pat. No. 5,067,413 to Kiuchi et al. describing a device for conveying travelable bodies which are provided no driving source, on a fixed path. A plurality of travelable bodies travels on the fixed path while aligned substantially in close contact with each other. Traveling power is transmitted to one of a plurality of travelable bodies which is positioned on at least one end of the alignment. The traveling power drives the travelable body with frictional force while pressing one side surface of the travelable body, and is transmitted to the travelable body while backing up the other side surface of the travelable body. A device to transmit traveling power is arranged on only a part of the fixed path.

While light rail systems such as the Rail-Veyor^{™} material handling system above described are generally accepted, there is a need to provide a rail system having a dump loop and components thereof that permit unloading of the cars of the train in a predetermined location. Further, a need exists for various components of the dump loop to be modularized.

### SUMMARY OF THE INVENTION

The present invention generally relates to a rail transport system having no internal drive, and in particular to an improved rail transport system for conveying bulk materials. The rail transport system includes allows for functionality, manufacturability and/or modularity and, therefore, can result in a reduction in system component costs, manpower and/or implementation. The rail transport system includes a dump loop and components thereof for enabling unloading of the rail cars in a predetermined location. The components thereof may be designed to be modular to allow for ease of manufacture and installation of the dump loop. The components may be prefabricated for later use on site.

In one embodiment, the present invention provides for a modular rail section for a dump loop in a train system, wherein the modular rail section is a modular dump loop section, the modular rail section comprising:
a set of parallel rails for guiding the cars of a train thereupon, wherein the set of parallel rails are inner parallel rails, the inner parallel rails having an annular curve to form at least a partial loop;
a set of parallel outer rails having a corresponding annular curve to form at least a partial loop, the set of parallel outer rails spaced from the parallel inner rails to accommodate the wheel of the cars of the train therebetween;
one or more bracers spanning the parallel rails for reinforcing, supporting or maintaining the spacing and/or shape of the parallel rails, the one or more bracers shaped to accommodate the cars of the train when travelling upon the rails in an upright or inverted orientation, and
wherein the modular dump loop section has a dump loop section angle defined by the angular difference between the angle of entrance into the dump loop section and the angle of exit from the dump loop section,
wherein the modular dump loop section has a dump loop section angle sufficient to at least partially invert a car travelling therethrough to cause unloading of the contents of the car, and
wherein the pair of inner rails comprise a flange on their respective finishing ends for connection to a support frame; and wherein entrance ends of the outer rails are tapered.

The modular rail section or sections as outlined above, entrance ends of the outer rails are tapered.

In another embodiment of the modular rail section or sections as outlined above, the dump loop section angle is greater than 180°.

In another embodiment of the modular rail section or sections as outlined above, the dump loop section angle is less than 180°.

In another embodiment of the modular rail section or sections as outlined above, the dump loop section angle is from 180° to 130°.

In another embodiment of the modular rail section or sections as outlined above, an angle of entrance into the modular dump loop section is horizontal or above grade.

In another embodiment of the modular rail section or sections as outlined above, an angle of entrance into the modular dump loop section is 20 above grade.

In another embodiment of the modular rail section or sections as outlined above, an angle of exit from the modular dump loop section is horizontal or below grade.

In another embodiment of the modular rail section or sections as outlined above, an angle of exit from the modular dump loop section is 150°.

In another embodiment of the modular rail section or sections as outlined above, the modular dump loop section further comprises a set of outer rail extensions for connection to the exit end of the parallel outer rails for extending the parallel outer rails and increasing the dump loop angle.

In another embodiment of the modular rail section or sections as outlined above, the bracing comprises center bracing, C-bracing and/or spoke bracing reinforcing, supporting or maintaining the spacing and/or shape of the annular curve and/or the spacing of the inner and outer rails.

In another embodiment of the modular rail section or sections as outlined above, the rail section is a modular exit ramp for guiding the cars of a train thereupon in an inverted orientation, wherein the bracing is inverted rail bracing spanning the parallel set of rails and is substantially U-shaped for accommodating the cars of the train in an inverted orientation without impeding the travel of the cars and wherein an end of the modular exit ramp is adapted for connection to outer rails of a dump loop section.

In another embodiment of the modular rail section or sections as outlined above, the rail section is a modular inverted section for guiding the cars of a train thereupon in an inverted orientation, wherein the bracing is inverted rail bracing spanning the parallel set of rails and is substantially U-shaped for accommodating the cars of the train in an inverted orientation without impeding the travel of the cars.

In another embodiment of the modular rail section or sections as outlined above, the parallel rails are substantially straight and contain no annular curve.

In another embodiment of the modular rail section or sections as outlined above, the parallel rails are contain an annular curve.

In another embodiment of the modular rail section or sections as outlined above, the rail section is a modular dump ramp for guiding cars of a train thereupon in a substantially upright orientation, wherein the parallel rails have a fixed predetermined length and wherein an exit end of the parallel rails is adapted for connection to inner rails of a dump loop section.

In a further embodiment, the present invention provides for a rail system comprising a modular dump loop comprised of any one of the modular sections as outlined above.

In yet a further embodiment, the present invention provides for a rail system comprising an underground dump loop for unloading cars of a train traveling on the rail system, wherein the rail system comprises:
a set of incoming parallel rails for guiding a train in an upright position;
a set of outgoing parallel rails for guiding a train in an upright position;
an underground dump loop section for inverting the cars of the train to thereby unload contents of the cars, the underground dump loop section comprising:
   a set of parallel inner rails for guiding the cars of a train thereupon, the parallel inner rails having an annular curve to form at least a partial loop;
   a set of parallel outer rails having a corresponding annular curve to form at least a partial loop, the set of parallel outer rails spaced from the parallel inner rails to accommodate the wheel of the cars of the train therebetween,
   one or more bracers spanning the parallel inner and outer rails for reinforcing, supporting or maintaining the spacing and/or shape of the parallel rails, the one or more bracers shaped to accommodate the cars of the train when travelling upon the rails in an upright or inverted orientation, the bracing comprises center bracing, C-bracing and/or spoke bracing reinforcing, supporting or maintaining the spacing and/or shape of the annular curve and/or the spacing of the inner and outer rails,
   wherein the modular dump loop section has a dump loop section angle defined by the angular difference between the angle of entrance into the modular dump loop section and the angle of exit from the modular dump loop section;
   wherein the pair of inner rails comprise a flange on their respective finishing ends for connection to a support frame
   wherein the dump loop section angle is sufficient to at least partially invert a car travelling therethrough to cause unloading of the contents of the car, and
   an underground collection shoot positioned below the dump loop section for collecting unloaded contents from the cars of the train.

In another embodiment of the rail system as outlined above, the dump loop section is comprised of a modular dump loop section as outlined above.

### BRIEF DESCRIPTION OF THE DRAWINGS

FIG. 1 is a diagrammatical illustration of an embodiment of a rail transport system for transporting bulk materials;
FIG. 2 is a side view of one embodiment of a train, comprising rail cars, operable with the rail transport system of FIG. 1;
FIG. 3 is a top plan view of one embodiment of a train, comprising rail cars, operable with the rail transport system of FIG. 1 (a example of a drive station is visible);
FIG. 4 is a diagrammatical illustration of another embodiment of a rail transport system for transporting bulk materials;
FIG. 5 is a diagrammatical side view of an example of a dump loop for a train system for unloading contents of the cars of a train according to one embodiment of the invention;
FIGS. 6A-6C are schematic illustrations of an example of an underground dump loop according to one embodiment of the invention;
FIG. 7 is a schematic side view of an example of a dump loop for a train system for unloading the contents of the cars of a train according to one embodiment of the invention wherein the loop is a 12 ft loop and 5 ft cars are used thereon;
FIG. 8 is a schematic side view of an example of a dump loop for a train system for unloading the contents of the cars of a train according to one embodiment of the invention wherein the loop is a 12 ft loop and 6 ft cars are used thereon;
FIG. 9 is a schematic isometric view of an example of one embodiment of a modular dump loop comprising embodiments of a dump ramp, a dump loop section, an exit ramp, and an inverted curved section;
FIG. 10A-C are side, back and isometric views of one embodiment of a modular dump loop section;
FIG. 11 is an isometric view of the modular dump loop section of FIG.10 in communication with an embodiment of a dump ramp and an embodiment of an exit ramp;
FIG. 12 is an isometric view of another embodiment of a modular dump loop comprising embodiments of a dump ramp, a dump loop section, an exit ramp, and an inverted curved section;
FIG. 13 is an isometric view of another embodiment of a modular dump loop comprising embodiments of a dump ramp, a dump loop section and an exit ramp;
FIG. 14A and FIG. 14B are isometric back and isometric front views of a further embodiment of a modular dump loop section comprising modular components;
FIG. 15 is a side view of the modular dump loop section comprising modular components of FIGS. 14A and 14B;
FIG. 16 is an isometric view of one embodiment of a modular exit ramp;
FIG. 17 is an isometric view of one embodiment of a modular dump ramp;
FIG. 18 is an isometric view of one embodiment of a modular inverted straight section; and
FIG. 19 is an isometric view of one embodiment of a modular inverted curved section.

### DETAILED DESCRIPTION

The present invention will now be described more fully hereinafter with reference to the accompanying drawings, in which illustrative embodiments of the invention are shown. This invention may, however, be embodied in many different forms and should not be construed as limited to the embodiments and examples set forth herein nor should the invention be limited to the dimensions set forth herein. Rather, the embodiments herein presented are provided so that this disclosure will be thorough and complete, and will fully convey the scope of the invention, which is defined by the appended claims, to those skilled in the art by way of these illustrative and non-limiting embodiments and examples. It will be understood to the person of skill in the art that many different forms and variations of the embodiments, examples and illustrations provided herein may be possible, and the various embodiments, examples, and illustrations provided herein should be construed as non-limiting embodiments, examples, and illustrations.

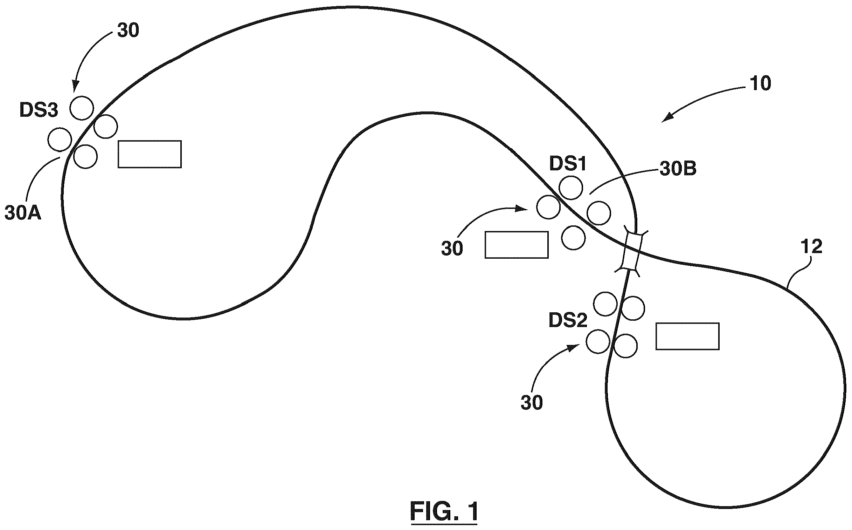

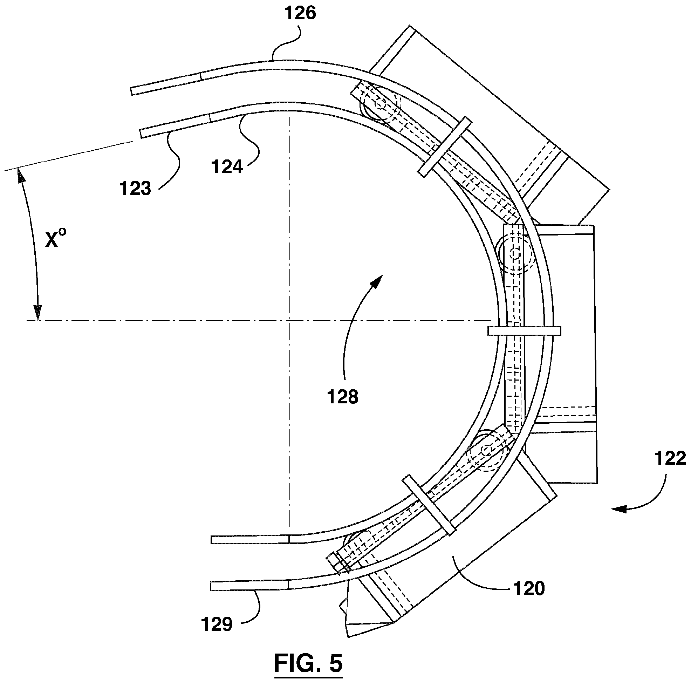

With reference initially to FIGS. 1-3, one train and rail transport system 10, in keeping with the teachings of the present invention, comprises a track 12 having parallel rails 12a, 12b. A train 14 includes a first, front, or lead car 16 having both forward and rear wheel pairs 18, 20 operable on the track 12 for providing a free wheeling movement to the lead car. For the embodiment herein described by way of example, the train includes additional cars described as a second or rear car 22 and an intermediate or middle rail car 24 or multiple intermediate or middle rails cars, carried between the lead and rear cars. The rear and intermediate cars 22, 24 include a forward pivotal connection or coupling assembly 26 for pivotally connecting the intermediate and rear cars to adjacent forward cars. The rear and intermediate cars 22, 24 have only rear wheel pairs 20 operable on the track 12 for providing a free wheeling movement thereto. The track 12 may include a dump loop section for unloading the cars of the train 14 at a predetermined location. The dump loop section and components thereof will be discussed in more detail below with reference to FIGS. 5-19.

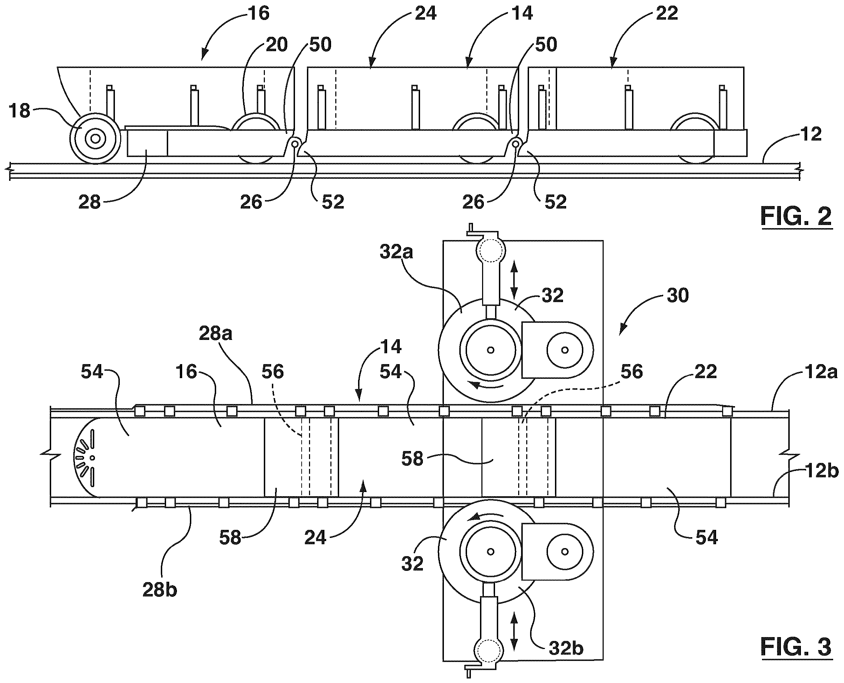

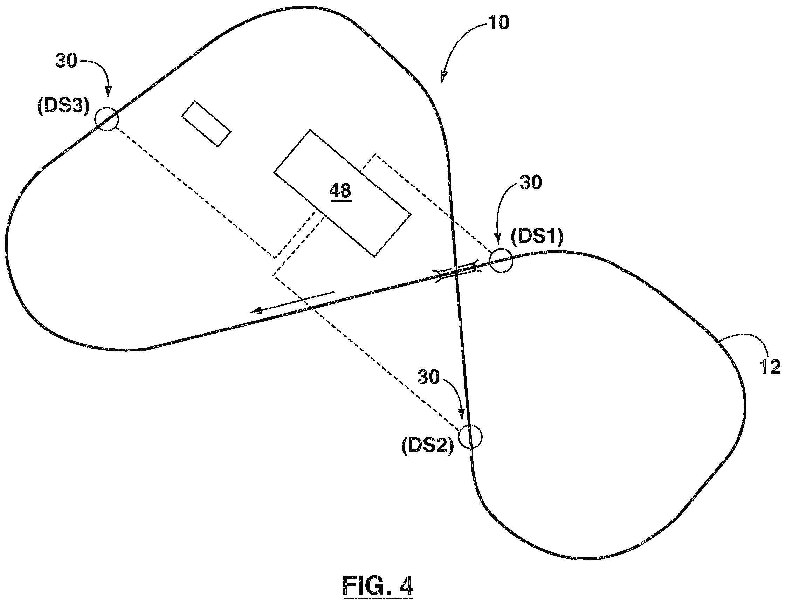

With continued reference to FIG. 2, each of the cars has a side plate 28 affixed thereto. With reference to FIGS. 1 and 3-4, multiple drive stations 30 each have a variable frequency drive (VFD) including a drive tire 32 for frictionally contacting the side plate 28 and imparting a driven moment to each rail car and thus the train 14. As illustrated with continued reference to FIG. 3, the embodiment herein described includes each car having opposing side plates 28a, 28b and opposing drive tires 32a, 32b. Specifically, each car may have a fixed side plate on each side, which runs substantially the length of the car and spaced outside the wheels and tracks. These side plates may be located symmetrically with the wheels and parallel to the light rails. In another arrangement, the side plates may be located asymmetrical with the wheels. However, in this arrangement, the wheels are part of the side plates such that the side plate-wheel arrangement allows the train to be moved either downstream or upstream. The wheels may be placed to allow the train to operate in either an upright or an inverted position. Each drive station 30 includes A/C inverters and a controller connected to every set of drive motors such that the motors may be synchronized through a modifying of at least one of voltage and frequency thereto. Forward or reverse motion of the train is the result of horizontal rotation of tires on opposite sides of the train turning in opposite directions with suitable pressure of said rotation that provides reduced slip between the tire surface and side plates. In other words, the two opposing tires are both pushed inward toward the center of the track. In order the stop the train, the drive tires 32 are further adapted to engage and apply pressure to the side plate 28 of the car.

As herein illustrated, the lead car 16 has a trough 54 and opposing side plates 28a, 28b having a reduced distance between them for smooth entrance into opposing drive tires 32a, 32b of the drive station. The rear car 22 has a trough and opposing side plates 28a, 28b which may be at a reduced distance between them to reduce shock when the train 14 exits the opposing drive tires 32a, 32b of the drive station 30. The intermediate cars 24 coupled to the lead car 16 and the rear car 22 by the clevis type coupling has its trough aligned to produce an overall open trough with gaps 56 between cars. A flexible flap 58 extends over the gap 56 between the cars 16, 24, 22. The cars, each comprise of a semicircle open trough and when joined or coupled together represents an open and continuous rigid trough for the entire length of the train. A flexible sealing flap attached near the front of the trailing car overlaps but is not attached to the rear of the lead car trough. A semi-circular trough is much better sealed with the flexible flap that other designs such as showed in the above-mentioned U.S. Pat. No. 3,752,334. This allows the train to follow the terrain and curves without losing its sealed integrity as a continuous trough. The material to be transported in the train is effectively supported and sealed by this flap as the material weight is equally distributed maintaining the seal against the metal trough of the forward car. The long continuous trough can provide for simplified loading as the train can be loaded and unloaded while moving similar to a conveyor belt. This can be considered an advantage over the batch loading equipment requirements of a conventional railroad hopper or rotary dump car.

As mentioned above, the track 12 can include a dump loop section for unloading the contents of the cars of the train 14 in a predetermined area or location. A number of different styles of unloading of the cars exist including for example a bottom dump, a side dump and an inversion dump.

An example of an inversion dump setup for unloading of a car is shown in the side schematic view of FIG. 5. The cars 120 of the train ride along the track 123 in an upright position. The track 123 loops thereby inverting the train and the contents of the cars 120 is unloaded or dumped. The loop portion 128 of the track includes an inner track 124 in communication with the track 123, also referred to as the dump ramp when in connection with the dump loop. The train rides upon the inner track 124 before inverted and gravity guides the train onto the outer track 126 of the loop 128. An exit ramp 129 in communication with the outer track 126 allows for exit of the train from the loop 128. Once the train has transferred to the outer track 126 or the exit ramp 129 and no longer rides upon the inner track 124, the inner track 124 may end. The dump ramp or entrance and the exit ramp 129 are tangent to the loop portion 128.

The tangential dump ramp and the exit ramp 129 communicate with the loop portion 128 with entrance and exit angles varying to adapt to the particular geometry of the solution used in a given dump loop application of the track.

The loop 128 may include an entrance angle at which the track 123 tangentially meets the inner track 124 of the loop 128 and may include an exit angle at which the outer track 126 tangentially meets the exit ramp 129. Typically, the entrance angle may range from level to more than 20°. The exit angle may range from level to more than 150°. It will be appreciated that the angles may change based on the setup, location and topography of the region in which the dump loop is situated as well as the power of the drive stations. The loop 128 may form a complete loop thereby reinverting the train into an upright position before exiting the loop. Alternatively, the train may be maintained in an inverted travelling state for an extended distance before being reinverted for loading. Leg extensions may be used to elevate the inverted track sections above the ground to accommodate the inverted cars so that they do not impact with the ground or topography.

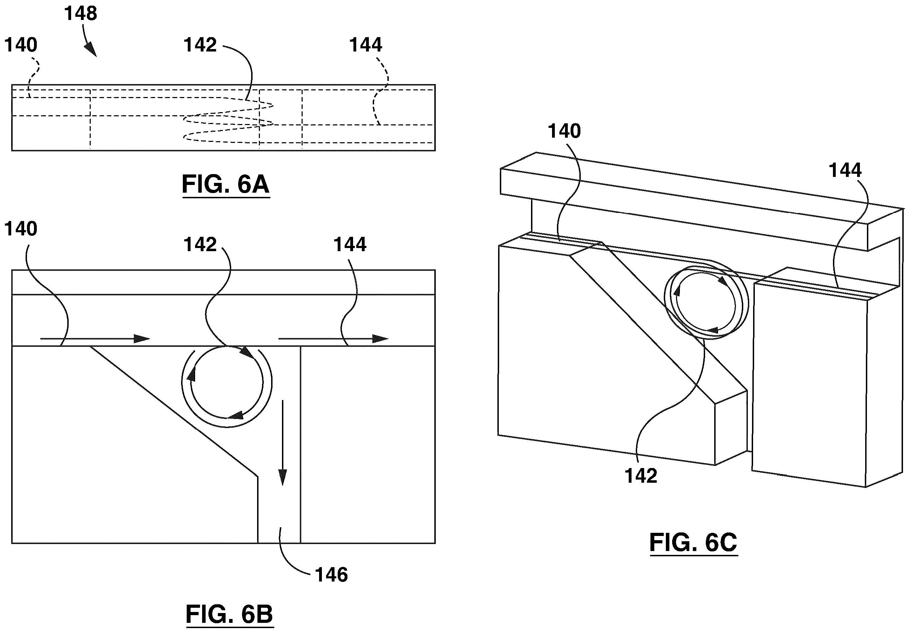

One embodiment of a complete loop is shown with reference to FIGS. 6A to 6C wherein an underground dump loop is shown for unloading the contents of the cars of the train. The underground dump loop 148 includes a track 140 also referred to as the dump ramp section, in connection with a loop section 142 for inverting the cars thereby dumping or unloading the contents of the cars into a collection shoot 146 or otherwise suitable collection area or zone. The exit of the loop section 142 is in communication with a exit ramp 144 allowing for exit of the train from the underground dumping area.

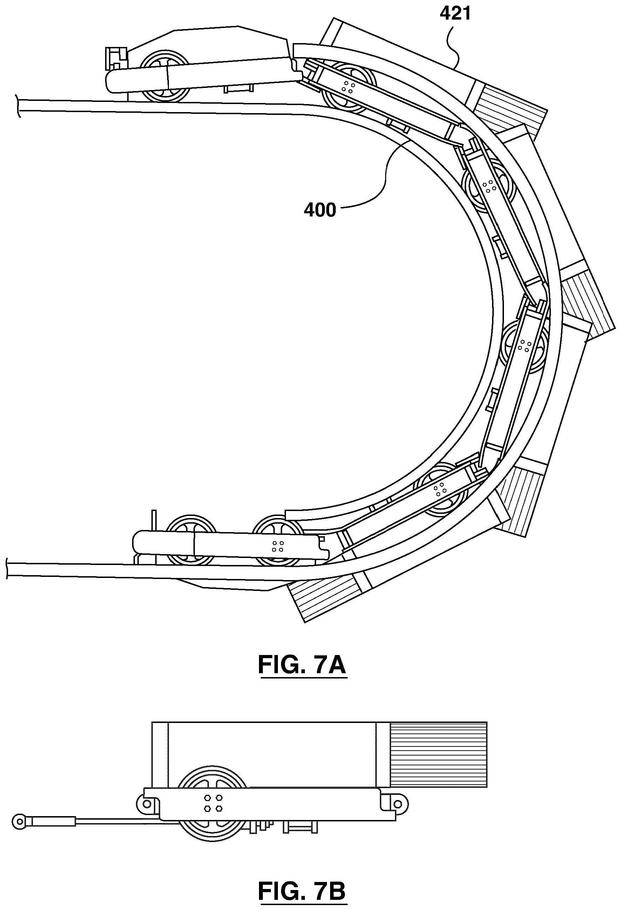

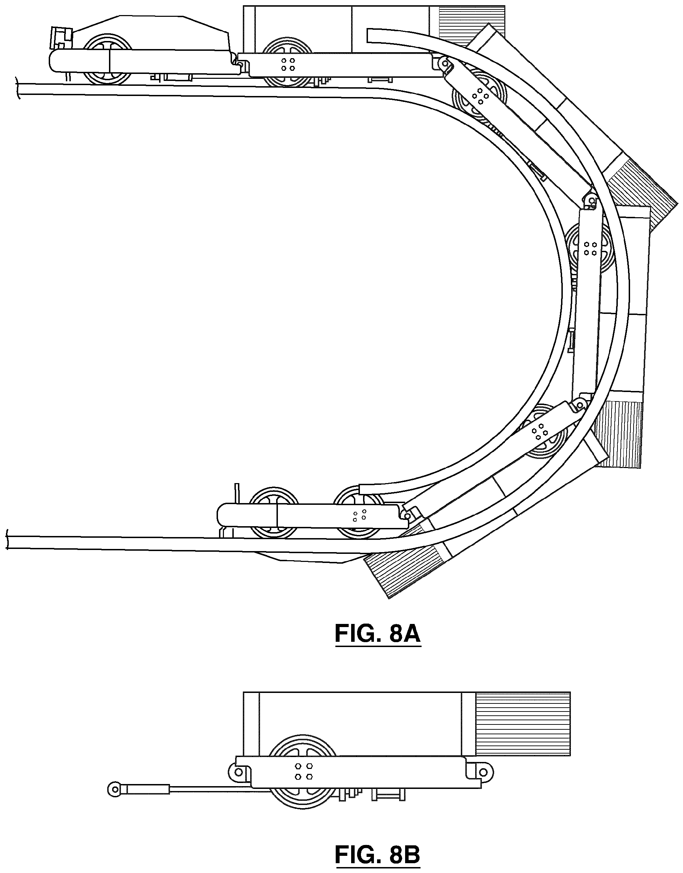

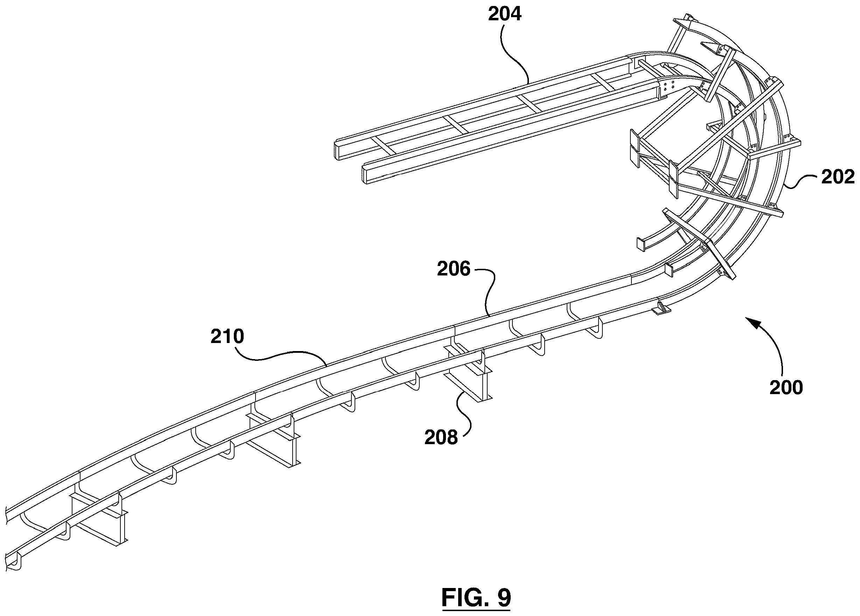

The diameter of the loop can be adjusted as needed based on the situation, for example the topography of the region and/or the length of the car selected. It some cases, it can be more effective or efficient to change the length of the car to accommodate the diameter of the loop as opposed to adjusting the diameter of the loop. The length of the car selected can be varied to optimize overall system costs or to accommodate the need for tight curves. The loop may have a 12 foot diameter for example as illustrated in FIGS. 7 and 8 and may accommodate cars of different lengths for example a car having a 5 ft length as shown in FIG. 7 or a car having a 6 ft length as shown in FIG. 8. It will be appreciated that the diameters and car lengths illustrated may be modified and these dimensions are merely illustrative of various possibilities and are not intended to be limiting. As will be outlined in more detail below with reference to FIGS. 9 to 19, modular tracks may be designed and prefabricated that result in a predetermined diameter for a full loop, semi-loop or half-loop system.

In general, each train system setup is a customized setup including rails and dump loops that are designed specifically for the topography of the location and the setup of the mine. Typically, each system is built off site and shipped to the site of end use where fabrication is completed. When adjustments are determined to be needed, the system is usually shipped back off-site, adjusted and sent back for final fabrication and completion until the engineering and order specifications are met. This requires intensive engineering, fabrication, man power and man hours to properly design, fabricate and adjust each system. Custom engineering of the dump loop components and sections for every installation adds engineering and fabrication costs and time to the project. Modular component design allows for simplification of these tasks. To overcome this downside and in an effort to reduce the time and costs needed to engineer, fabricate and establish a rail system or sections thereof, for example the dump loop section of a rail system, a modular dump loop and associated components has been engineered. Modular component design allows for simplification of these tasks.

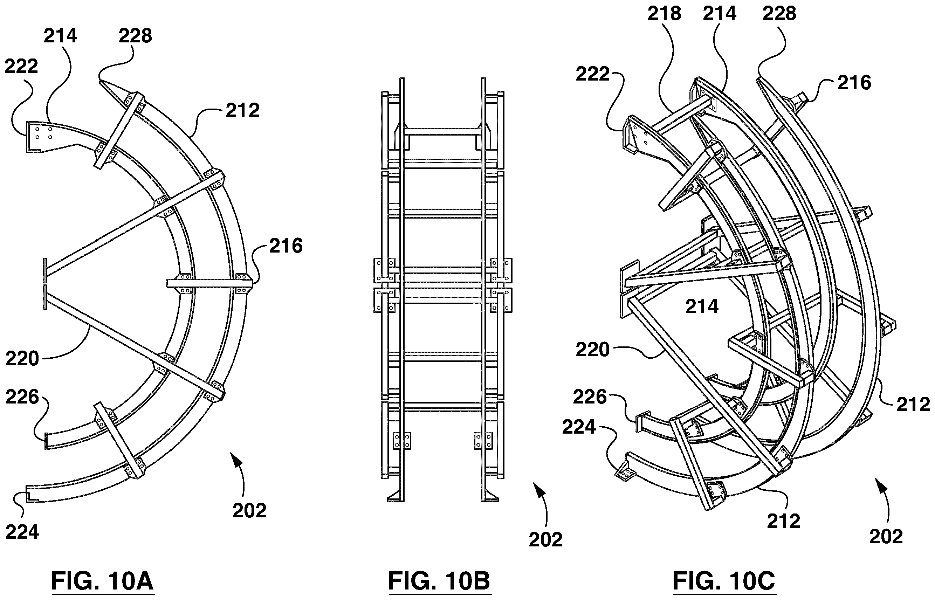

An example of one embodiment of a modular dump loop is shown schematically in FIGS. 9 and 10. The modular dump loop is shown generally at 200 and may be used in conjunction with a typically train system such as those described herein and may also be retrofitted into an existed train system such as those described herein. As outlined above, the dump loop 200 is used to invert the cars of the train thereby unloading their contents at the predetermined location in the train system in connection with the track of the system. The modular dump loop 200 includes a dump loop section 202 in connection with a dump ramp section 204 for directing an upright car into the dump loop section 202. At the exit of the dump loop section 202 is an exit ramp 206 for guiding the train in an inverted position from the dump loop section 202. In the example shown in FIG. 9, the train continues in an inverted position over an extended distance and therefore a series of modular inverted tracks 210 are implemented sequentially connected to the exit ramp 206. In order to allow for the inverted train to pass over the ground without contacting the ground or objects on the ground, the inverted tracks 210 should be elevated above the ground or above a trench that accommodates the inverted train cars. To this end, leg extensions 208 positioned beneath the inverted track 210 may be used to elevate the inverted track 210 thereby allowing for unimpeded passage of the inverted train above the ground.

A detailed view of the modular dump loop section of FIG. 9 is shown in FIGS. 10A - 10C wherein FIG. 10A provides a side view, FIG. 10B a back view and FIG. 10C an isometric view.

In an effort to reduce build time, costs and manpower needed to implement a dump loop for a train system, a modular dump loop section, such as for example the modular dump loop section of FIGS. 9 and 10 has been provided as is shown in general at 202. The dump loop section 202 includes set of parallel inner rails 214 for guiding a train when in an upright or non-inverted position about the loop. Opposite the inner rails 214 are a set of parallel outer rails 212 for engaging and guiding the train once the train has substantially inverted and gravity forces the wheels of the train to be guided by the outer rails 212. Ideally, the inner and outer rails are spaced apart the distance (or slightly greater than the distance) of the track engaging diameter of the wheels of the train thereby allowing for little or no play in the wheels as they rare guided by the inner and then outer rails 214 and 212 respectively.

As shown in FIGS. 10A-C, in one embodiment, the modular dump loop section 202, which may be prefabricated and shipped to the site of end use, comprises a set of parallel inner rail 214 on which the wheels of the train are guided when first entering the dump loop section 202. The inner rails 214 have an annular curved in a loop or semi-loop to invert the cars of the train. A set of parallel outer rails 212 engages and guides the wheels of the cars as the cars become inverted. The outer rails 212 also have an annular curve in a loop or semi-loop and are positioned opposite the inner rails 214 to allow the outer rails to receive the wheels of the cars as the cars become inverted and leave the inner rails 214. The outer rails have a tapered leading end 228 allowing for smooth or unimpeded entry of the wheels of the cars into the loop section 202.

A plurality of braces may be used to reinforce, support and maintain the spacing and shape of the inner and outer rails. It will be appreciated that any number and orientation of the bracing may be implemented to reinforce, support and maintain the inner and outer rails as is needed based on the intended speed and weight of the train and the weight of the intended load to be carried. In the embodiment shown in FIGS. 10A-C, a center brace 218 is used between the inner rails. A C-brace 216 is used to support the inner and outer rails and maintain the distance between the inner rails and the outer rails. A spoke brace 220 transverse the inner and outer rails and two separate locations along the loop and meeting within the loop may be used to support the loop itself and maintain the angle of the loop and the spacing of the inner and outer rails.

The ends of the parallel inner rails 214 end in a flange 222 allowing for a connection point with the end of the rails of the dump ramp 204. Similarly, the parallel outer rails 212 may end in a substantially flat surface or flange 224 allowing for a connection point with the end of the rails of the exit ramp 206. The inner rails 214 have a flange on their finishing ends allowing for connection to a support frame or the like for supporting the loop section 202.

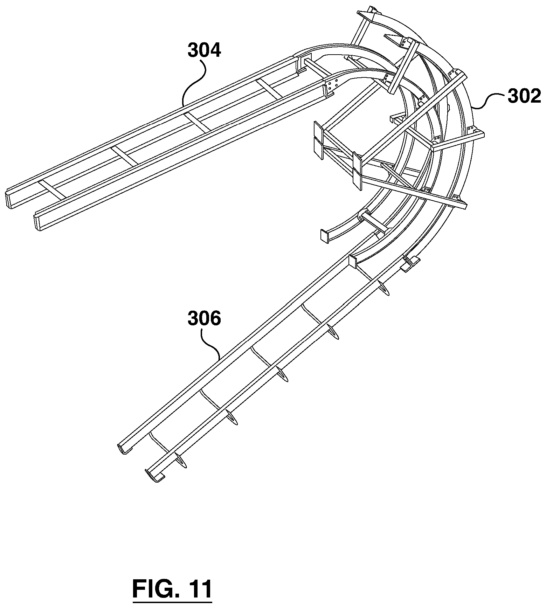

In the embodiment shown in FIGS. 9 and 10, the loop section 202 is substantially a 180° loop or half-loop designed for horizontal entry and horizontal exit into and out from the dump loop section 202. In other words, the dump ramp section 204 enters at a horizontal angle and the exit ramp 206 is also connected at a horizontal angle. It will be appreciated and is also further illustrated in FIGS. 11-13 that various other angles of approach or entry into the dump loop 202 and exit therefrom may be designed. For example, the dump loop section 302 of FIG. 11 has a 20° grade dump ramp section 304 and a 150° exit ramp section 306 with a corresponding dump loop section that loops about 130°. For the purposes of this disclosure the size of the loop with respect to the angle covered will be referred to as the dump loop angle. Because of the modular nature of the dump loop sections, a dump loop section of the desired loop angle may be selected as needed or desired for a given on-site situation or demand. This also allows for modular dump ramps and modular exit ramps to be used which are simply connected to the a dump loop section of the desired loop angle which the dump ramp and the exit ramp may be the same modular component for use across any of the differently angled dump loop sections.

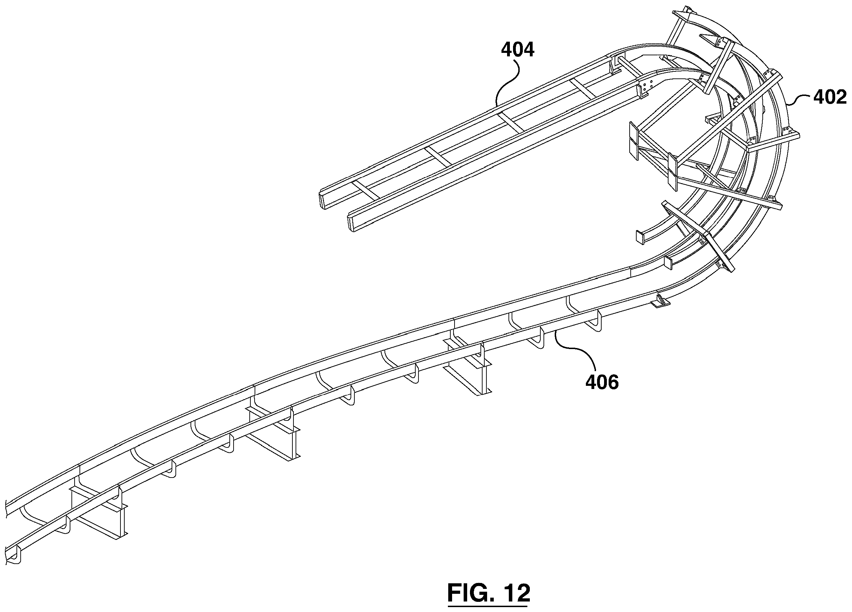

The dump loop section 402 of FIG. 12 has a 20° grade dump ramp section 404 and a horizontal exit ramp section 406 with a corresponding dump loop section 402 that loops about 160°.

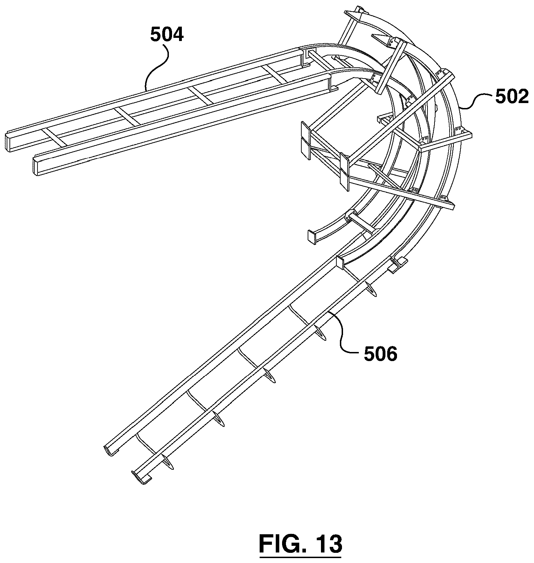

The dump loop section 502 of FIG. 13 has a horizontal dump ramp section 504 and a 150° exit ramp section 506 with a corresponding dump loop section 502 that loops about 150°.

It will be appreciated that although dump loop sections of 180°, 160°, 150° and 130° degrees have been illustrated, modular dump loops sections of other angles are within the concept of the invention and are contemplated by the inventors.

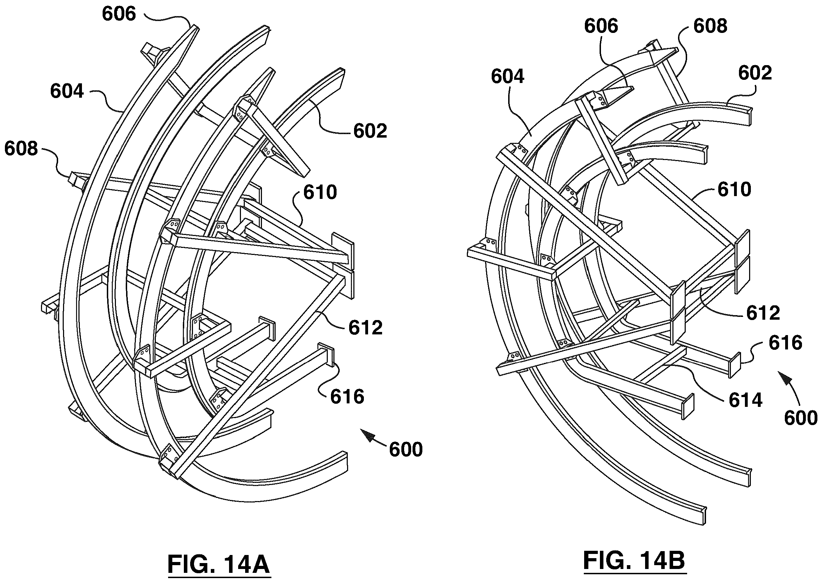

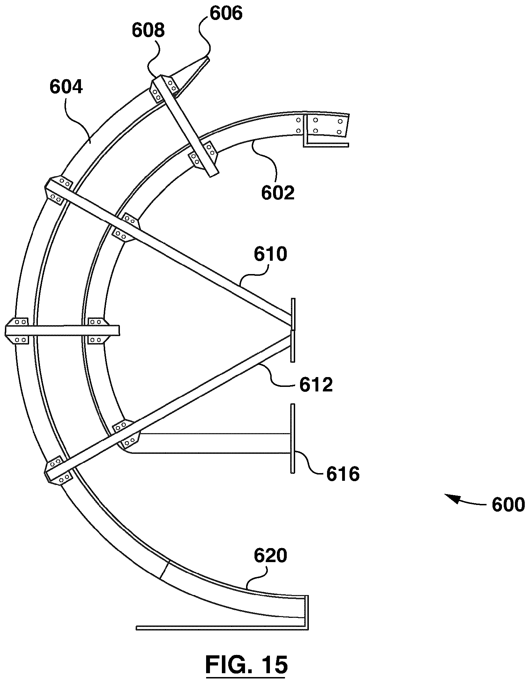

A further embodiment of a modular dump loop section is shown generally at 600 in FIGS. 14A and 14B and FIG. 15. The modular dump loop section 600 is comprised of modular components that may be used to make up dump loop sections of various angles. A modular inner rail 602 is used that can accommodate both a horizontal exit as well as an exit of reduced angle by bending away from the outer rail 604 after a transition point has been reached whereby the wheels of a car would have transitioned to the outer rail 604 have passed the point of inversion. This accommodates the situation whereby horizontal exit is desired the wheel of the car is guided a further distance and a greater angle that is needed for a reduced angle exit from the dump loop section 600.

In addition, the outer rail 604 is designed for an exit of reduced angle, for example a 150° exit into the exit ramp and a modular outer rail extension 620 may be added to the outer rail to extended the outer rail, for example, to a horizontal position for horizontal exit from the dump loop section 600 into the exit ramp. In this way, the modular components may be prefabricated and simply put together and adjusted as needed to suit a given topography at the site of end use.

The dump loop section 600 may include the bracing components 608, 610, 612 and 614 as described above to reinforce, support and maintain the spacing and shape of the inner and outer rails and to mount the section 600 to a structural member, for example an A-frame. As outlined above, the outer rails 604 also include a tapered end 606 and the bracing and the rails include flanges or flat sections that allow for connection to other rails such as the exit ramp and the dump ramp or support frames or structures.

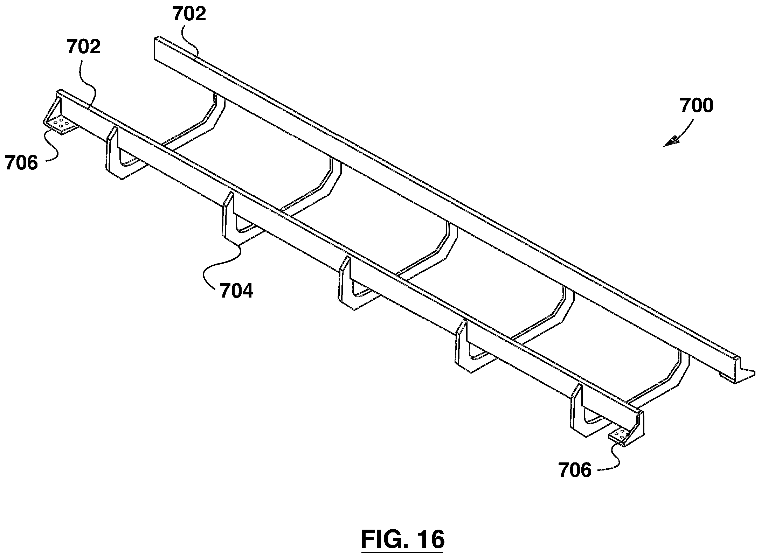

FIG. 16 shows one embodiment of a modular exit ramp 700 for connection to the outer rails of a dump loop section such as those for example as described herein. The exit ramp 700 includes parallel rails 702 adapted to guide a train in an inverted orientation. The rails 702 include inverted rail bracing 704 which are generally U-shaped to accommodate the passage of an inverted rail car thereabove travelling on the rails 702 of the exit ramp 700. As described above, bracing 704 may be used to reinforce, support and maintain the spacing and shape of the rails. By having U-shaped bracing spanning the rails 702 they do not impede an inverted rail car travelling along the rails but rather can accommodate a rail car in an inverted orientation extending below the rails 702. Rail connectors or mounts 706 may be positioned at suitable locations on the rail for securing the rail to legs, leg extensions or abutting rails or dump loop sections as is needed.

The modular exit ramp 700 is shown as being generally flat but may be curved in the event that a curved exit ramp is desired or required based on the topology of the site.

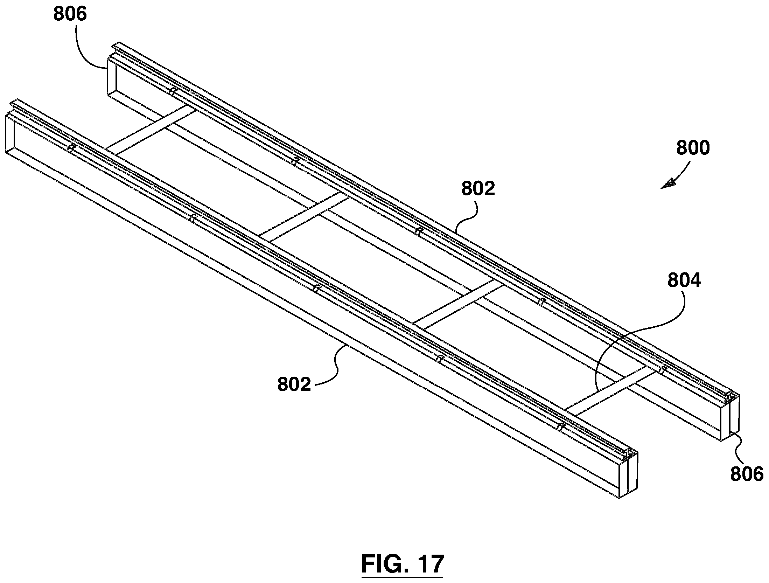

One embodiment of modular dump ramp 800 is shown in FIG. 17 for connection to the inner rails of a dump loop section for guiding a train into the dump loop section for inversion. The modular dump ramp 800 may alternatively be connected to a further rail section for guiding the train along a desired path. The dump ramp 800 is comprised of parallel rails 802 adapted to guide a train in an upright position. As described above, center bracing 804 may be used to reinforce, support and maintain the spacing and shape of the rails. Rail connectors or mounts 806 may be positioned at suitable locations on the rail for securing the rail to legs, leg extensions or abutting rails or dump loop sections as is needed.

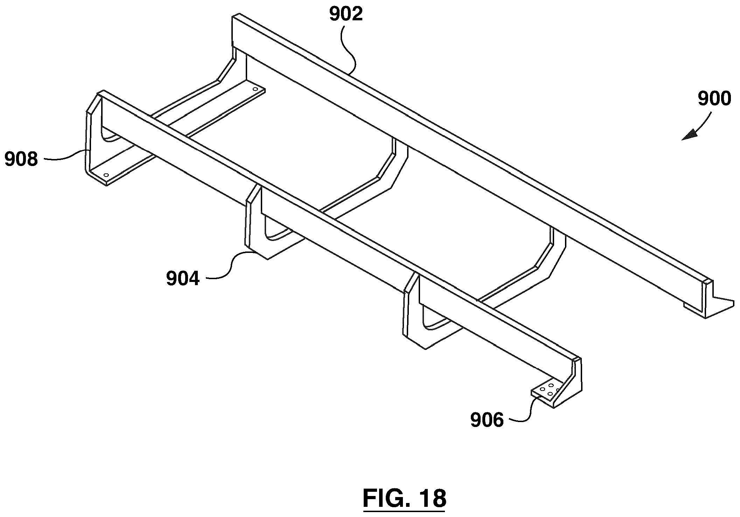

One embodiment of a modular inverted straight section 900 is shown in FIG. 18 for guiding a train in an inverted orientation. The inverted straight section 900 may be connected to a further inverted straight section or to an exit ramp for allowing further travel of the train in an inverted orientation. The inverted straight section 900 includes parallel rails 902 adapted to guide the train in an inverted orientation. Spanning the rails 902 are U-shape bracing 904 to reinforce, support and maintain the spacing and shape of the rails. By having U-shaped bracing spanning the rails 902 they do not impede an inverted rail car travelling along the rails but rather can accommodate a rail car in an inverted orientation extending below the rails 902. Rail connectors or mounts 906 and 908 may be positioned at suitable locations on the rail for securing the rail to legs, leg extensions or abutting rails or dump loop sections as is needed.

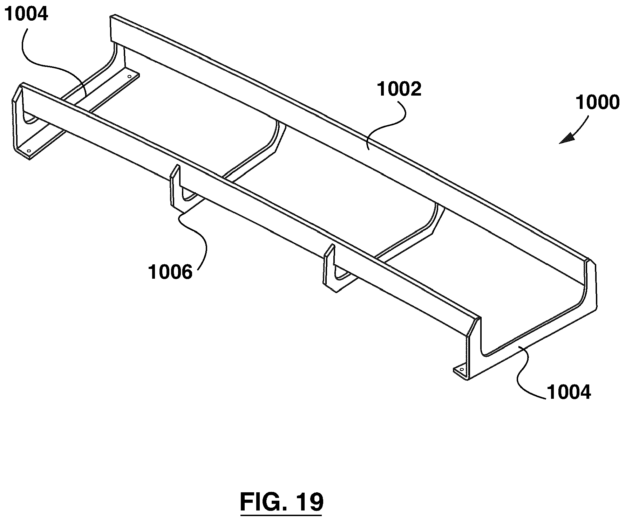

Similarly to the inverted straight section 900 described above with reference to FIG. 18, the invention also provides for a modular inverted curved section 1000 as described with reference to FIG. 19. The inverted curved section 1000 may be connected to a further inverted curved section, an inverted straight section or to an exit ramp for allowing further travel of the train in an inverted orientation. The inverted curved section 1000 includes parallel curved rails 1002 adapted to guide the train in an inverted orientation in a gradual semi-looped curve. Spanning the rails 1002 are U-shape bracing 1006 to reinforce, support and maintain the spacing and shape of the rails. By having U-shaped bracing spanning the rails 1002 they do not impede an inverted rail car travelling along the rails but rather can accommodate a rail car in an inverted orientation extending below the rails 1002. Rail connectors or mounts 1004 may be positioned at suitable locations on the rail for securing the rail to legs, leg extensions or abutting rails or dump loop sections as is needed.

It will be appreciated that the bracing components, connectors or mounts, as described herein are merely illustrative of examples of bracing components, connectors or mounts that may be incorporated into the modular rail sections to allow for reinforcing, support, maintain the spacing and shape of the rails, connection of the rail sections to each other or to legs or leg extensions. The placement and number of bracings, connectors or mounts may be altered, increased or reoriented without departed from the scope of the claims.

Described herein are various dump loops and components therefor that can form part of a rail transport system. It will be appreciated that embodiments, illustrations, and examples are provided for illustrative purposes intended for those skilled in the art, and are not meant to be limiting in any way. Various modifications, amendments, revisions, substitutions and changes may be made to the dump loops and components thereof that are within the scope of the claims.

## Claims

1. A modular rail section for a dump loop (200) in a train system, wherein the modular rail section is a modular dump loop section (202), the modular rail section comprising:
a set of parallel rails (12a, 12b) for guiding the cars (16, 22, 24) of a train (14) thereupon, wherein the set of parallel rails are inner parallel rails (214), the inner parallel rails (214) having an annular curve to form at least a partial loop;
a set of parallel outer rails (212) having a corresponding annular curve to form at least a partial loop, the set of parallel outer rails (212) spaced from the parallel inner rails (214) to accommodate the wheel of the cars of the train therebetween;
one or more bracers (218, 216, 220) spanning the parallel rails for reinforcing, supporting or maintaining the spacing and/or shape of the parallel rails, the one or more bracers shaped to accommodate the cars of the train when travelling upon the rails in an upright or inverted orientation; and
wherein the modular dump loop section (202) has a dump loop section angle defined by the angular difference between the angle of entrance into the dump loop section (202) and the angle of exit from the dump loop section (202);
wherein the modular dump loop section (202) has a dump loop section angle sufficient to at least partially invert a car travelling therethrough to cause unloading of the contents of the car;
wherein the pair of inner rails (214) comprise a flange (226) on their respective finishing ends for connection to a support frame; and
wherein entrance ends of the outer rails are tapered (228).

2. The modular rail section of claim 1, wherein the dump loop section angle is greater than 180°.

3. The modular rail section of claim 1, wherein the dump loop section angle is less than 180°.

4. The modular rail section of claim 1, wherein the dump loop section angle is from 180° to 130°.

5. The modular rail section of claim 1, wherein an angle of entrance into the modular dump loop section is horizontal or above grade, preferably 20° above grade.

6. The modular rail section of claim 5, wherein an angle of exit from the modular dump loop section is horizontal or below grade, preferably 150° below grade.

7. The modular rail section of claim 3, wherein the modular dump loop section further comprises a set of outer rail extensions for connection to the exit end of the parallel outer rails for extending the parallel outer rails and increasing the dump loop angle.

8. The modular rail section of claim 1, wherein the bracing comprises center bracing, C-bracing and/or spoke bracing reinforcing, supporting or maintaining the spacing and/or shape of the annular curve and/or the spacing of the inner and outer rails.

9. A rail transport system (10) comprising the modular rail section of claim 1.

10. The rail transport system of claim 9, further comprising a modular exit ramp for guiding the cars of a train thereupon in an inverted orientation, wherein the bracing is inverted rail bracing spanning the parallel set of rails and is substantially U-shaped for accommodating the cars of the train in an inverted orientation without impeding the travel of the cars and wherein an end of the modular exit ramp is adapted for connection to outer rails of a dump loop section.

11. The rail transport system of claim 9, further comprising a modular inverted section for guiding the cars of a train thereupon in an inverted orientation, wherein the bracing is inverted rail bracing spanning the parallel set of rails and is substantially U-shaped for accommodating the cars of the train in an inverted orientation without impeding the travel of the cars.

12. The rail transport system of claim 9, further comprising a modular dump ramp for guiding cars of a train thereupon in a substantially upright orientation, wherein the parallel rails have a fixed predetermined length and wherein an exit end of the parallel rails is adapted for connection to inner rails of a dump loop section.

13. The modular rail section of claim 1, wherein the set of parallel inner rails comprises a parallel inner rail bending away from the set of parallel outer rails after a transition point at which the wheels of a car travelling therethrough transition to the set of parallel outer rails.

14. The modular rail system of claim 1, wherein ends of the set of parallel outer rails end in a substantially flat surface allowing for a connection point with the end of the rails of a dump ramp, exit ramp, or a support frame.

## Patentansprüche

1. Modularer Schienenabschnitt für einen Mülldeponiekreislauf (200) in einem Zugsystem, wobei der modulare Schienenabschnitt ein modularer Mülldeponiekreislaufabschnitt (202) ist, wobei der modulare Schienenabschnitt Folgendes umfasst:
einen Satz paralleler Schienen (12a, 12b) zum Führen der Waggons (16, 22, 24) eines Zugs (14) darauf, wobei der Satz paralleler Schienen innere parallele Schienen (214) ist, wobei die inneren parallelen Schienen (214) eine ringförmige Krümmung aufweisen, um mindestens einen Teilkreislauf zu bilden;
einen Satz paralleler äußerer Schienen (212), die eine entsprechende ringförmige Krümmung aufweisen, um mindestens einen Teilkreislauf zu bilden, wobei der Satz paralleler äußerer Schienen (212) von den parallelen inneren Schienen (214) beabstandet ist, um die Räder der Waggons des Zugs dazwischen aufzunehmen;
eine oder mehrere Streben (218, 216, 220), die die parallelen Schienen überspannen, um den Abstand und/oder die Form der parallelen Schienen zu verstärken, zu stützen oder aufrechtzuerhalten, wobei die eine oder die mehreren Streben so geformt sind, dass sie die Waggons des Zugs aufnehmen, wenn sie in einer aufrechten oder umgekehrten Ausrichtung auf den Schienen fahren; und
wobei der modulare Mülldeponiekreislaufabschnitt (202) einen Mülldeponiekreislaufabschnittwinkel aufweist, der durch die Winkeldifferenz zwischen dem Eintrittswinkel in den Mülldeponiekreislaufabschnitt (202) und dem Austrittswinkel aus dem Mülldeponiekreislaufabschnitt (202) definiert ist;
wobei der modulare Mülldeponiekreislaufabschnitt (202) einen Mülldeponiekreislaufabschnittwinkel aufweist, der ausreicht, um einen hindurchfahrenden Waggon mindestens teilweise umzukehren, um ein Entladen des Inhalts des Waggons zu bewirken;
wobei das Paar innerer Schienen (214) einen Flansch (226) an ihren jeweiligen abschließenden Enden zur Verbindung mit einem Stützrahmen aufweist; und
wobei die Eintrittsenden der äußeren Schienen (228) verjüngt sind.

2. Modularer Schienenabschnitt nach Anspruch 1, wobei der Mülldeponiekreislaufabschnittwinkel größer als 180° ist.

3. Modularer Schienenabschnitt nach Anspruch 1, wobei der Mülldeponiekreislaufabschnittwinkel kleiner als 180° ist.

4. Modularer Schienenabschnitt nach Anspruch 1, wobei der Mülldeponiekreislaufabschnittwinkel zwischen 180° und 130° beträgt.

5. Modularer Schienenabschnitt nach Anspruch 1, wobei ein Eintrittswinkel in den modularen Mülldeponiekreislaufabschnitt horizontal oder über der Bodenfläche, vorzugsweise 20° über der Bodenfläche, ist.

6. Modularer Schienenabschnitt nach Anspruch 5, wobei ein Austrittswinkel aus dem modularen Mülldeponiekreislaufabschnitt horizontal oder unterhalb der Bodenfläche, vorzugsweise 150° unterhalb der Bodenfläche, ist.

7. Modularer Schienenabschnitt nach Anspruch 3, wobei der modulare Mülldeponiekreislaufabschnitt ferner einen Satz äußerer Schienenverlängerungen zur Verbindung mit dem Austrittsende der parallelen äußeren Schienen zum Verlängern der parallelen äußeren Schienen und Vergrößern des Mülldeponiekreislaufwinkels umfasst.

8. Modularer Schienenabschnitt nach Anspruch 1, wobei die Verstrebung eine Mittelverstrebung, eine C-Verstrebung und/oder eine Strebenverstärkung umfasst, die den Abstand und/oder die Form der ringförmigen Krümmung und/oder den Abstand der inneren und äußeren Schienen verstärken, stützen oder aufrechterhalten.

9. Schienentransportsystem (10), umfassend den modularen Schienenabschnitt nach Anspruch 1.

10. Schienentransportsystem nach Anspruch 9, ferner umfassend eine modulare Austrittsrampe zum Führen der Waggons eines Zugs darauf in einer umgekehrten Ausrichtung, wobei die Verstrebung eine umgekehrte Schienenverstrebung ist, die den parallelen Schienensatz überspannt und im Wesentlichen U-förmig ist, um die Waggons des Zugs in einer umgekehrten Ausrichtung aufzunehmen, ohne die Fahrt der Waggons zu behindern, und wobei ein Ende der modularen Austrittsrampe zur Verbindung mit äußeren Schienen eines Mülldeponiekreislaufabschnitts angepasst ist.

11. Schienentransportsystem nach Anspruch 9, ferner umfassend einen modularen umgekehrten Abschnitt zum Führen der Waggons eines Zugs darauf in einer umgekehrten Ausrichtung, wobei die Verstrebung eine umgekehrte Schienenverstrebung ist, die den parallelen Schienensatz überspannt und im Wesentlichen U-förmig ist, um die Waggons des Zugs in einer umgekehrten Ausrichtung aufzunehmen, ohne die Fahrt der Waggons zu behindern.

12. Schienentransportsystem nach Anspruch 9, ferner umfassend eine modulare Mülldeponierampe zum Führen von Waggons eines Zugs darauf in einer im Wesentlichen aufrechten Ausrichtung, wobei die parallelen Schienen eine fest vorbestimmte Länge aufweisen und wobei ein Austrittsende der parallelen Schienen zur Verbindung mit inneren Schienen eines Mülldeponiekreislaufabschnitts angepasst ist.

13. Modularer Schienenabschnitt nach Anspruch 1, wobei der Satz paralleler innerer Schienen eine parallele innere Schiene umfasst, die sich nach einem Übergangspunkt, an dem die Räder eines hindurchfahrenden Waggons auf den Satz paralleler äußerer Schienen übergehen, von dem Satz paralleler äußerer Schienen wegbiegt.

14. Modulares Schienensystem nach Anspruch 1, wobei Enden des Satzes paralleler äußerer Schienen in einer im Wesentlichen flachen Oberfläche enden, die einen Verbindungspunkt mit dem Ende der Schienen einer Mülldeponierampe, einer Austrittsrampe oder eines Stützrahmens ermöglicht.

## Revendications

1. Section de rail modulaire pour une boucle de décharge (200) dans un système de train, dans laquelle la section de rail modulaire est une section de boucle de décharge modulaire (202), la section de rail modulaire comprenant :
un ensemble de rails parallèles (12a, 12b) pour guider les wagons (16, 22, 24) d'un train (14) dessus, dans laquelle l'ensemble de rails parallèles sont des rails parallèles intérieurs (214), les rails parallèles intérieurs (214) ayant une courbe annulaire pour former au moins une boucle partielle ;
un ensemble de rails extérieurs parallèles (212) ayant une courbe annulaire correspondante pour former au moins une boucle partielle, l'ensemble de rails extérieurs parallèles (212) étant espacés des rails intérieurs parallèles (214) pour loger la roue des wagons du train entre eux ;
une ou plusieurs entretoises (218, 216, 220) couvrant les rails parallèles pour renforcer, supporter ou maintenir l'espacement et/ou la forme des rails parallèles, les une ou plusieurs entretoises étant formées pour recevoir les wagons du train lorsqu'ils se déplacent sur les rails dans une orientation verticale ou inversée ; et
dans laquelle la section de boucle de décharge modulaire (202) a un angle de section de boucle de décharge défini par la différence angulaire entre l'angle d'entrée dans la section de boucle de décharge (202) et l'angle de sortie de la section de boucle de décharge (202) ;
dans laquelle la section de boucle de décharge modulaire (202) a un angle de section de boucle de décharge suffisant pour inverser au moins partiellement un wagon qui le traverse pour provoquer le déchargement du contenu du wagon ;
dans laquelle la paire de rails intérieurs (214) comprend une bride (226) sur leurs extrémités de finition respectives pour la liaison à un cadre de support ; et
dans laquelle les extrémités d'entrée des rails extérieurs sont effilées (228).

2. Section de rail modulaire selon la revendication 1, dans laquelle l'angle de section de boucle de décharge est supérieur à 180°.

3. Section de rail modulaire selon la revendication 1, dans laquelle l'angle de section de boucle de décharge est inférieur à 180°.

4. Section de rail modulaire selon la revendication 1, dans laquelle l'angle de section de boucle de décharge est de 180° à 130°.

5. Section de rail modulaire selon la revendication 1, dans laquelle un angle d'entrée dans la section de boucle de décharge modulaire est horizontal ou au-dessus du niveau du sol, de préférence de 20° au-dessus du niveau du sol.

6. Section de rail modulaire selon la revendication 5, dans laquelle un angle de sortie de la section de boucle de décharge modulaire est horizontal ou sous le niveau du sol, de préférence de 150° sous le niveau du sol.

7. Section de rail modulaire selon la revendication 3, dans laquelle la section de boucle de décharge modulaire comprend en outre un ensemble d'extensions de rail extérieur pour la liaison à l'extrémité de sortie des rails extérieurs parallèles pour étendre les rails extérieurs parallèles et augmenter l'angle de boucle de décharge.

8. Section de rail modulaire selon la revendication 1, dans laquelle le contreventement comprend un contreventement central, un contreventement en C et/ou un contreventement de rayon renforçant, soutenant ou maintenant l'espacement et/ou la forme de la courbe annulaire et/ou l'espacement des rails intérieurs et extérieurs.

9. Système de transport sur rails (10) comprenant la section de rail modulaire selon la revendication 1.

10. Système de transport sur rails selon la revendication 9, comprenant en outre une rampe de sortie modulaire pour guider les wagons d'un train dessus dans une orientation inversée, dans lequel le contreventement est un contreventement de rail inversé couvrant l'ensemble parallèle de rails et est sensiblement en forme de U pour recevoir les wagons du train dans une orientation inversée sans gêner le déplacement des wagons et dans lequel une extrémité de la rampe de sortie modulaire est adaptée pour être reliée aux rails extérieurs d'une section de boucle de décharge.

11. Système de transport sur rails selon la revendication 9, comprenant en outre une section inversée modulaire pour guider les wagons d'un train dessus dans une orientation inversée, dans lequel le contreventement est un contreventement de rail inversé couvrant l'ensemble parallèle de rails et est sensiblement en forme de U pour recevoir les wagons du train dans une orientation inversée sans gêner le déplacement des wagons.

12. Système de transport sur rails selon la revendication 9, comprenant en outre une rampe de décharge modulaire pour guider les wagons d'un train dessus dans une orientation sensiblement verticale, dans lequel les rails parallèles ont une longueur prédéterminée fixe et dans lequel une extrémité de sortie des rails parallèles est adaptée pour être reliée aux rails intérieurs d'une section de boucle de décharge.

13. Section de rail modulaire selon la revendication 1, dans laquelle l'ensemble de rails intérieurs parallèles comprend un rail intérieur parallèle qui s'écarte de l'ensemble de rails extérieurs parallèles après un point de transition auquel les roues d'un wagon qui le traversent font la transition vers l'ensemble de rails extérieurs parallèles.

14. Système de rail modulaire selon la revendication 1, dans lequel les extrémités de l'ensemble de rails extérieurs parallèles se terminent par une surface sensiblement plate permettant un point de liaison avec l'extrémité des rails d'une rampe de décharge, d'une rampe de sortie ou d'un cadre de support.
